# FASCICULE DE BREVET EUROPEEN

(11) **EP 1 766 231 B1**
(45) Date de publication et mention de la délivrance du brevet: **23.03.2016**
(21) Numéro de dépôt: 05786329.2
(22) Date de dépôt: 01.07.2005
(51) Int. Cl.: F03D 3/06

(54) **EOLIENNE A AXE VERTICAL**
WINDTURBINE MIT VERTIKALER ACHSE
VERTICAL-AXIS WIND TURBINE

(30) Priorité: 02.07.2004 FR 0407406
(43) Date de publication de la demande: 28.03.2007
(73) Titulaire: Vimak, 67390 Marckolsheim (FR)
(72) Inventeur: VIDA MARQUES, Firmiliano, Manuel, L-4016 Esch sur Alzette (LU)
(74) Mandataire: Littolff, Denis
(86) Numéro de dépôt international: PCT/FR2005/001705
(87) Numéro de publication internationale: WO 2006/013273

(56) Documents cités:
- DE-A- 19 544 400
- DE-A1- 10 054 700
- GB-A- 2 356 431
- US-A- 4 365 934
- US-A- 4 410 806
- US-A- 5 083 901
- US-A1- 2002 105 190
- US-B1- 6 379 115

## Description

La présente invention concerne une éolienne à axe d'allure verticale dont la conception a été optimisée pour lui permettre de travailler pratiquement dans n'importe quelles conditions climatiques, avec au surplus un rendement élevé qui permet de réduire sensiblement le coût de l'énergie. La logique suivie par les concepteurs permet également d'aboutir à une configuration extrêmement fiable, offrant enfin des facilités de construction et de maintenance inédites dans ce type de système.

Selon l'invention, l'éolienne comporte classiquement un fût central rotatif auquel sont fixées des pales, et elle est caractérisée à titre essentiel en ce que lesdites pales peuvent tourner et se déplacer radialement par rapport au fût central, le mouvement de chaque paie étant contrôlé et commandé de manière autonome en fonction des conditions auxquelles elle est soumise à chaque instant, en vue d'optimiser le rendement global de l'éolienne. Cette caractéristique, qui fonde le système de l'invention, doit permettre à l'éolienne de fonctionner dans la plupart des conditions météorologiques.

Dans certains documents, tels que le brevet US-6 370 915 et le brevet DE-195 44 400, il est fait mention d'éoliennes dont la position angulaire des pales est gérée par un ordinateur. Toutefois, dans ces deux cas, la position angulaire de chaque pale est prévue à l'avance par programme, selon un nombre restreint de modèles qui tiennent compte de la force du vent, et les pales ne sont donc pas gérées de manière complètement autonome à chaque instant

Plusieurs degrés de liberté dans le réglage des pales sont offerts par la structure de l'invention, lesquels permettent de positionner celles-ci de façon optimale notamment par rapport au vent, indépendamment les unes des autres, assurant dès lors un rendement de fonctionnement toujours élevé, et permettant en cas de besoin de positionner les pales de manière très repliée lorsque les vents atteignent des vitesses très importantes, par exemple en cas de tempête. Dans ce cas, la position des pales n'offre plus de prise dynamique au vent, et l'éolienne s'arrête pour des raisons de sécurité.

Plus précisément, l'une au moins des extrémités de chaque arbre de rotation des pales est coulissable dans une direction radiale par rapport au fût central. Dans l'hypothèse où une seule des extrémités de chaque arbre est mobile radialement, il s'agit de préférence de l'extrémité inférieure.

Il est cependant possible de prévoir que les deux extrémités de chaque arbre de rotation des pales soient mobiles radialement indépendamment l'une de l'autre. Le choix de l'unicité ou du doublage de la possibilité de déplacement radial dépend de l'application, de la région d'implantation de l'éolienne, etc.

D'un point de vue pratique, cette possibilité de mouvement radial résulte de la liaison des extrémités des arbres de rotation des pales à des bras qui se développent radialement à partir du fût central rotatif. Plus précisément, ces bras sont munis de glissières qui se développent selon leur axe.

Contrairement aux éoliennes actuelles, les pales ont par conséquent et dans tous les cas, dans l'invention, deux points de fixation, ce qui permet de les construire avec une surface beaucoup plus grande, en d'en obtenir une puissance bien supérieure notamment lorsque les conditions de vent sont favorables.

Dans une première version de réalisation de l'invention, les pales sont rigides. Elles sont donc fabriquées, de manière classique, avec des matériaux qui permettent d'offrir au vent une surface indéformable.

Selon une configuration possible, la section transversale des pales est en forme de S allongé.

La surface extérieure ondulée qui en résulte a pour but d'optimiser encore l'attaque du vent sur chaque pale, en permettant une meilleure gestion des flux d'air et de leurs turbulences au voisinage des surfaces. Le guidage desdits flux vers la périphérie externe de chaque pale est améliorée par cette forme, d'où une diminution des turbulences et une meilleure application de la force du vent. De plus, cette forme en S permet d'augmenter les performances aérodynamiques des pales en mouvement.

Selon une possibilité supplémentaire, les pales peuvent être constituées de plusieurs parties assemblables. L'objectif est de permettre un transport plus aisé, et un montage sur site plus facile pour des pales qui peuvent atteindre de très grandes dimensions.

Selon une seconde variante possible de l'invention, les pales peuvent être fabriquées en matériau souple, par exemple utilisé dans le domaine des voiles.

Outre une incidence économique très favorable, puisque ce type de pale a un coût de revient très sensiblement inférieur à celui des pales rigides, ces pales pourront être utilisées dans des domaines dans lesquels elles peuvent avoir une double fonction : par exemple, en cas d'utilisation sur un bateau ou un voilier, en maintenant les pales dans une position fixe, elles pourront avoir les mêmes fonctions qu'une voile sur un voilier.

Dans cette hypothèse, une éolienne à pales souple installée sur un bateau pourra fonctionner en génératrice pour alimenter un moteur de bateau lorsque la navigation à voile est impossible, ou en voile classique lorsque l'utilisation du moteur n'est pas requise.

Dans cette configuration, les pales sont enroulables dans ou autour d'un support inférieur et déployables à l'aide de câbles coopérant avec un support supérieur. En d'autres termes, chaque pale pourra être escamotée par enroulage.

Pour éviter les vibrations, notamment lorsque la voile faseye, au moins le support supérieur est doté d'un dispositif amortisseur.

Que ce soit dans la variante à pales rigides ou dans la version à pales souples, la section longitudinale des pales peut s'inscrire dans un trapèze. Dans l'hypothèse des voiles, notamment mais non exclusivement, la base de la voile est alors de longueur supérieure à sa bordure haute.

Les pales, même si leur surface est grande, doivent pouvoir à tout moment être orientées correctement et rapidement par rapport aux vents pour optimiser le rendement du système, voire repliées lorsque des conditions de tempête surviennent. Ceci doit en outre pouvoir être fait le plus rapidement possible, par mesure permanente des paramètres météorologiques et répercussion immédiate desdites mesures sur la position effective des pales. C'est la raison pour laquelle la position radiale des arbres de rotation des pales ainsi que leur position angulaire sont de préférence gérées par au moins un ordinateur auquel des capteurs des paramètres météorologiques de l'environnement de l'éolienne sont reliés, lesdits ordinateurs pilotant des moyens moteurs entraînant les pales. Cette caractéristique, bien que non strictement nécessaire, est néanmoins essentielle dans nombre d'applications.

L'ordinateur, qui calcule notamment le mouvement de rotation de chaque pale, peut l'accélérer ou le freiner pour optimiser sa position par rapport aux conditions de vent en vue d'améliorer le rendement global de l'éolienne.

Ainsi, chaque pale aura à tout moment la position idéale de prise au vent. Les paramètres pris en compte par le ou les ordinateurs sont notamment :
- la vitesse et la direction du vent, mesurées par une girouette et un anémomètre ;
- la position des pales ;
- la vitesse et la consommation d'énergie de l'éolienne ;
- la consommation des pales ;
- la température atmosphérique, et celle des composants de l'éolienne.

Ces différents paramètres dépendent notamment du nombre et de la nature des capteurs qui sont installées, des actionneurs qui permettent la mise en oeuvre du programme de l'ordinateur, ainsi que du logiciel qui fait tourner l'ensemble. A cet égard, il est à noter que le ou les ordinateurs peuvent être paramétrés par un ordinateur extérieur, notamment pour changer certaines données, voire de manière globale pour améliorer ou mettre à jour le logiciel de gestion.

Parmi les actionneurs, les moyens moteurs mentionnés sont de préférence des moteurs électriques.

En somme, le mouvement de chaque pale est contrôlé par ordinateur, à l'aide de un ou plusieurs logiciels qui sont conçus pour mettre en correspondance les éléments physiques du système, à savoir notamment la structure et le dimensionnement des pales et plus généralement de l'éolienne, avec les paramètres météorologiques mesurés. La position des pales est dans ce cas asservie en permanence aux conditions météorologiques et climatiques, la réponse du système aux valeurs mesurées intervenant en outre quasi immédiatement.

Lorsque la vitesse du vent augmente par exemple soudainement, les pales sont déplacées par le système pour les rapprocher du fût rotatif, et orientées de telle manière qu'elles n'offrent pas la totalité de leur surface aux efforts exercés par le vent. A l'inverse, dans l'hypothèse où le vent faiblit, les pales se déploient pour offrir une surface plus importante, et permettre la production de l'énergie dans des conditions optimales.

La commande de la position à la fois angulaire et radiale par rapport au fût central de chaque pale indépendamment l'une de l'autre et à chaque instant, en fonction de paramètres climatiques déterminés, permet d'obtenir un rendement maximal du système, et par conséquent la production de la plus grande quantité d'énergie possible à chaque instant.

Selon une possibilité, les capteurs sont placés au-dessus des pales c'est-à-dire dans la zone où les mesures notamment de la vitesse et de la force du vent sont les plus significatives.

Ces capteurs, et d'une manière générale tous les appareils de mesure, ne subissent en outre dès lors aucune perturbation due au passage des pales.

Par ailleurs, la structure de l'éolienne de l'invention est telle que les dispositifs de transformation d'énergie, et en particulier la génératrice électrique, sont disposés au niveau de la base de l'éolienne, sous le fût central rotatif.

Cette configuration est particulièrement avantageuse, notamment par rapport aux structures qui existent aujourd'hui, car elle permet d'obtenir une excellente stabilité de l'éolienne et elle diminue fortement les risques en cas d'accident La fabrication et l'entretien de l'éolienne sont également grandement facilités par cet agencement.

Dans les éoliennes actuelles, la génératrice électrique et tous les équipements associés sont en général disposés en partie supérieure du mât, à proximité des pales. C'est notamment le cas pour les éoliennes à pales horizontales. Compte tenu de la puissance offerte et du dimensionnement correspondant des éoliennes qui sont installées notamment dans les pays nordiques, il est aisé de concevoir les difficultés à la fois de fabrication et de maintenance, ainsi que tous les risques correspondant à leur mise en oeuvre, qui sont directement liés à une telle configuration. Transporter et construire à plusieurs dizaines de mètres du sol par exemple une génératrice de forte puissance n'est pas un travail anodin.

Selon l'invention, le fût rotatif de l'éolienne entoure un fût fixe, lequel est de préférence surmonté d'une cabine supérieure et muni de moyens d'accès à ladite cabine.

En fait, ces moyens d'accès à la cabine consistent par exemple en un escalier et/ou en un ascenseur.

Cette cabine peut par exemple être utilisée pour la signalisation et la mise en place des divers appareils de mesure. Par rapport à ses devancières, l'éolienne de l'invention comporte donc, en partie supérieure, une structure beaucoup plus légère puisqu'elle ne contient aucun des éléments mécaniques nécessaires à la production et/ou à la transmission de l'énergie. La cabine supérieure est cependant très utile car elle regroupe les organes de mesure, elle peut permettre un contrôle par le haut de la structure, etc...

De préférence, selon l'invention, le fût fixe est composé d'éléments télescopiques. L'intérêt est de permettre de transporter en une seule opération l'ensemble du fût intérieur de l'éolienne. Dans le cas d'éoliennes de grande puissance, cette possibilité présente un intérêt considérable du fait de la taille des éléments à déplacer. La remorque servant au transport pourra ériger le fût sur le lieu d'implantation suivant le principe utilisé de nos jours par les camions qui livrent des silos à chape ou à crépi sur les chantiers.

Un autre camion pourra d'ailleurs être équipé d'un système hydraulique mobile qui sera positionné, en phase de travail, dans le fût fixe, et permettra son érection. Une fois celle-ci achevée, le système hydraulique sera rechargé sur le camion et prêt à être utilisé sur un autre chantier.

Le fût central, une fois érigé et fixé définitivement, servira lui-même de grue pour le montage du fût extérieur et de divers éléments. Ce principe de montage permet d'éviter l'utilisation de grues gigantesques comme c'est le cas à ce jour pour le montage des éoliennes dans les pays de l'Europe du nord, ce qui entraînera bien entendu des économies substantielles.

Selon une possibilité additionnelle, le fût rotatif est constitué d'éléments légers ou ajourés, ce qui permet de diminuer son poids, le but étant cependant de garder la résistance maximale à la torsion.

L'éolienne de l'invention peut de plus être arrimée au sol via des haubans, lesquels sont de préférence fixés à ladite cabine. Ce haubannage est rendu possible par la structure particulière de l'invention et notamment ses pales d'allure verticale rétractables, alors qu'il était jusqu'ici impossible à mettre en oeuvre dans les éoliennes de facture classique sans provoquer d'interférence positionnelle avec les pales. L'existence d'un tel haubannage permet d'ailleurs d'envisager l'implantation d'éoliennes selon l'invention dans des zones où il était jusqu'ici impossible d'en disposer du fait de conditions climatiques difficiles qui rendent l'érection même de la structure très problématique.

On a mentionné précédemment que l'un des avantages essentiels de l'invention réside dans l'implantation en partie basse de l'éolienne de l'ensemble des structures techniques de production d'énergie, qui assure en plus des autres avantages une stabilité bien supérieure. Celle-ci couplée au haubannage, rend l'ancrage de la structure très efficace.

Cette base de l'éolienne peut de plus être aménagée en local technique dans laquelle sont disposés une salle des machines et un local de contrôle informatique.

En somme, les éoliennes de l'invention sont vraiment conçues pour travailler partout et en particulier dans des régions où règnent des conditions météorologiques extrêmes, dans des endroits qui leurs étaient jusqu'ici interdits, tout en offrant une fiabilité technique très élevée. Pour y parvenir, selon une caractéristique fondamentale, la structure de l'invention repose sur un positionnement optimal, par rapport au vent, de chaque pale à chaque instant, ce qui permet de produire en permanence un maximum d'énergie en fonction des conditions extérieures. La configuration de l'invention procure par conséquent, à long terme, un avantage économique indéniable, car le coût de production de ladite énergie est du coup inférieur à celui qui résulte des divers systèmes déjà existants.

Les éoliennes de l'invention autorisent également un grand nombre de variantes, selon les zones d'implantation et les contraintes qui en résultent. Pour autant, leurs coûts de construction sont inférieurs à ceux que l'on peut attendre dans le cadre de la construction d'éoliennes classiques. On a mentionné la possibilité d'implanter les éoliennes de l'invention dans des zones jusqu'ici non accessibles : outre le problème des conditions météorologiques extrêmes, certaines zones sont actuellement interdites car les éoliennes classiques entraînent des nuisances sonores, incompatibles avec un voisinage humain.

En l'espèce, l'invention apporte un confort acoustique très largement supérieur à ces dernières, du fait de la configuration particulière des pales et de leur adaptabilité permanente au vent. Le système de l'invention peut d'ailleurs de ce point de vue être apparenté aux voiles d'un bateau, pour lesquelles on recherche aussi l'adaptation permanente de la position à la direction du vent.

Pour des raisons de résistance mécanique, les éoliennes classiques ne peuvent pas non plus être installées dans des zones très froides, car la vitesse de rotation des pales par rapport à l'axe principal de l'éolienne, qui est souvent élevée pour compenser le faible rendement, entraîne un refroidissement des pièces et, parfois, la formation de blocs de glace, notamment à l'extrémité des pales, ce qui peut s'avérer extrêmement dangereux. C'est en particulier un danger redoutable pour des systèmes à pales horizontales.

Dans l'invention, la vitesse de rotation est en générale bien inférieure pour une production de puissance largement supérieure. Il en découle un refroidissement moindre des diverses pièces en mouvement, ce qui diminue corollairement le risque de formation de tels blocs de glace. La structure verticale diminue elle aussi le risque de formation des blocs de glace.

L'invention va à présent être décrite plus en détails, en référence aux figures annexées, pour lesquelles :
- la figure 1 montre une vue générale en plan d'une éolienne de l'invention;
- la figure 2 représente schématiquement, en coupe, le fonctionnement de l'éolienne de l'invention pour une position angulaire donnée de chaque pale, et pour deux positions radiales distinctes par rapport au fût rotatif ;
- la figure 3 montre, toujours en coupe, une autre position angulaire des pales, qui prélude notamment à un regroupement vers le fût central en cas de tempête ;
- la figure 4 représente ledit regroupement, qui confère une stabilité maximale à l'éolienne en cas d'apparition de vent d'une très grande force;
- la figure 5 représente une position possible des pales lorsque les vents sont violents mais permettent le fonctionnement de l'éolienne ;
- la figure 6 illustre une application possible de l'invention sur un bateau ;
- la figure 7 montre une application de petite taille sur des mâts d'antennes, par exemple de relais de téléphonie mobile ; et
- la figure 8 représente un schéma synoptique du fonctionnement global de l'ordinateur central de commande.

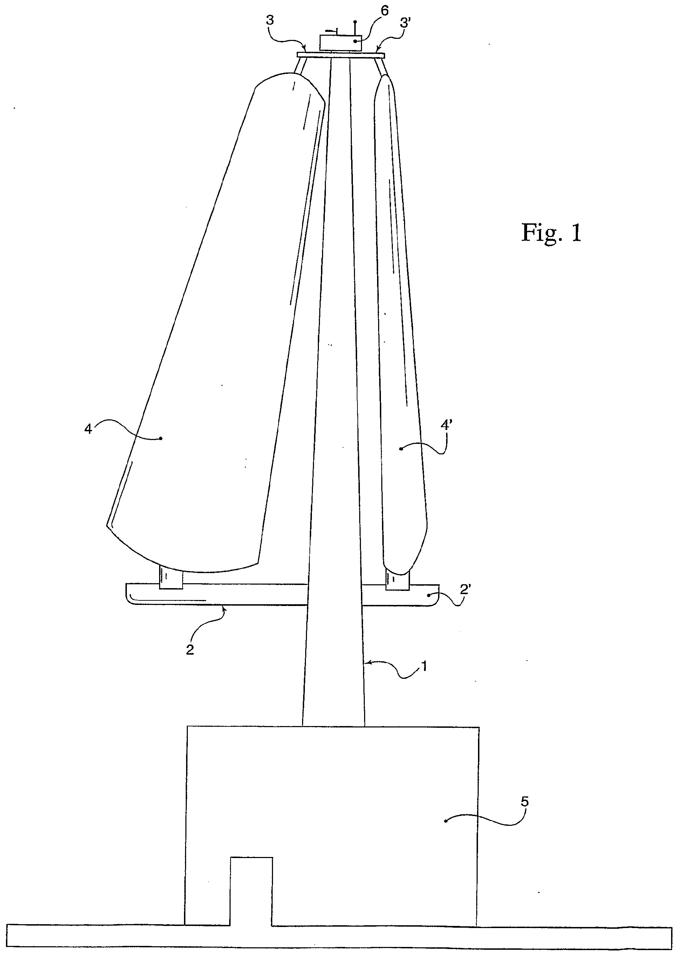

En référence à la figure 1, l'éolienne de l'invention comporte à titre essentiel un fût rotatif (1) auquel sont reliés des bras inférieurs (2, 2') et supérieurs (3, 3') supportant les pales (4, 4'). La liaison mécanique entre lesdites pales (4, 4') et les bras respectivement supérieurs (3, 3') et inférieurs (2, 2') est telle qu'elles peuvent d'une part tourner autour d'un axe central, et d'autre part se rapprocher ou s'éloigner radialement du fût central (1), comme cela sera montré plus en détails en référence aux figures suivantes. Le fût central (1) est disposé sur un local technique (5), dans lequel sont installés à titre essentiel les équipements de production de l'énergie comme la génératrice et les équipements qui lui sont associés. Ce local (5) peut également comporter des dispositifs de stockage de ladite énergie, ainsi qu'une salle de commande, des moyens de transformation de l'énergie, etc.

Une cabine (6) est disposée en partie supérieure du mât. Cette cabine supérieure est elle-même surplombée et/ou équipée de moyens de signalisation aérienne, de capteurs et d'appareils de mesure des paramètres climatiques et météorologiques environnants, paramètres qui sont ensuite retransmis aux moyens informatiques qui déterminent la position précise individuelle des pales (4, 4'). Ces appareils, par exemple des anémomètres, ont principalement pour fonction de mesurer la vitesse, la direction et la force des vents. Le cas échéant, des haubans (non représentés) permettant de consolider la fixation de l'éolienne au sol sont attachés à ladite cabine (6).

Le fût central (1), qui est rotatif puisqu'il supporte les bras (2, 2') et (3, 3'), entoure un fût fixe muni de moyens d'accès à la cabine (6). Il entraîne bien entendu la génératrice d'électricité disposée dans le local technique (5), dans lequel sont également situés l'ensemble des systèmes de contrôle de l'éolienne. La plupart des opérations liées au fonctionnement quotidien de l'éolienne de l'invention prennent en pratique place dans ce local (5), contrairement à ce qui passe dans les éoliennes classiques, pour lesquelles la salle des machines se situe en partie supérieure près de la génératrice, des machines et des organes de commande, d'où les multiples difficultés pratiques évoquées auparavant.

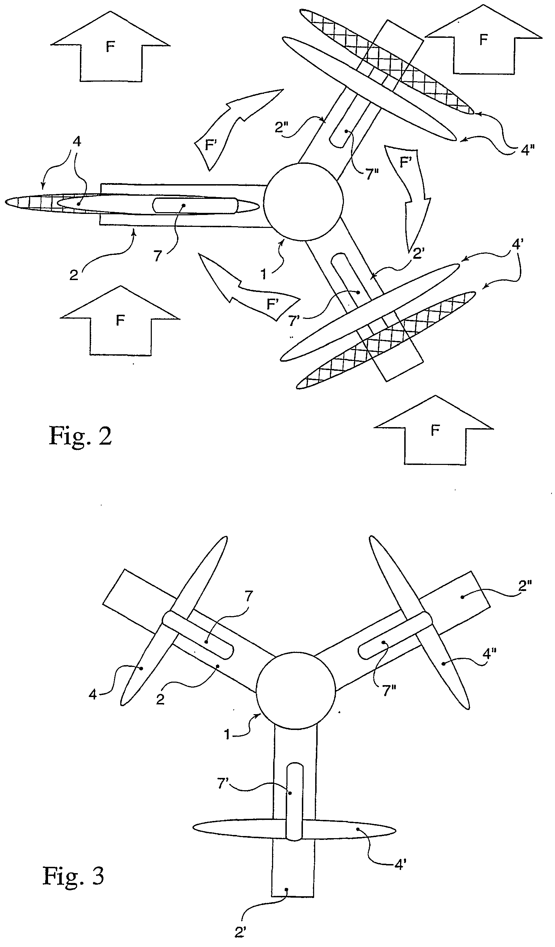

La coupe apparaîssant en figure 2 montre les bras inférieurs (2, 2', 2") reliés au fût central (1), et deux positions radiales distinctes des pales (4, 4', 4") par rapport auxdits bras (2, 2', 2"). La direction du vent est symbolisée par les flèches F, alors que la direction de rotation de l'éolienne est figurée par les flèches F'. Dans cette figure, les pales (4, 4', 4") sont en position de travail normal, c'est-à-dire qu'elles sont orientées de manière à offrir, à chaque instant, une prise au vent maximale pour un rendement optimal. Ainsi, la pale (4) est disposée perpendiculairement au vent, alors que les pales (4', 4") sont orientées d'une manière telle que la résultante des forces liées au vent comporte une composante tangentielle qui favorise la rotation du fût rotatif (1) de l'éolienne.

Dans la position angulaire représentée, qui est une position d'efficacité maximale par rapport à la direction du vent, les pales (4) peuvent être déplacées radialement, par exemple par coulissement dans des glissières (7, 7', 7") comme cela est symbolisé par l'existence de deux positions différentes des pales (4, 4', 4"). La position des pales (4, 4', 4") est gérée par ordinateur, et elles sont par conséquent toujours positionnées en vue d'obtenir un rendement optimal.

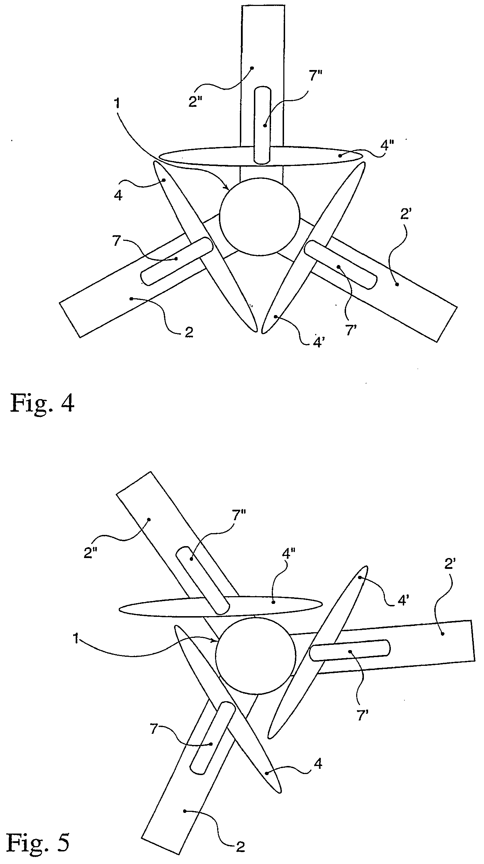

En figure 3, la position angulaire des pales (4, 4', 4") n'est plus une position de rendement maximal mais une préparation de repli lorsque la force du vent atteint les limites techniques de fonctionnement du système. L'éolienne ne tourne plus que par sa propre inertie, et n'est pratiquement plus entraînée par les pales (4, 4', 4"). A l'extrême, lorsque des conditions météorologiques de tempête risqueraient de détruire l'ensemble du système, les pales (4, 4', 4") sont repliées comme montré en figure 4, et forment une "pyramide" qui assure la sécurité maximale de l'ouvrage. En fait, le positionnement adjacent des extrémités latérales de chaque pale (4, 4', 4") est rendu possible par le coulissement radial de chacune de ces dernières en direction du fût central rotatif (1). Il est à noter que les glissières (7, 7', 7") sont donc calculées de telle sorte que leur extrémité intérieure (proximale du fût rotatif) est située à une distance dudit fût (1) telle que l'adjacence des côtés latéraux est possible, de préférence sans contact.

La figure 5 montre que même dans cette position, il est possible de faire pivoter légèrement les pales (4, 4', 4") de telle sorte qu'une fraction seulement de leur surface puisse offrir une prise au vent. Ce type de fonctionnement est par conséquent indiqué lorsque les vents sont très violents, mais permettent une utilisation de l'éolienne sans dommage.

De nombreuses applications sont possibles pour ce type d'éolienne. La forme des pales (4, 4', 4"), la longueur du fût rotatif (1), etc... doivent alors être adaptés aux environnements dans lesquels les éoliennes de l'invention sont implantées. Selon les températures, la vitesse moyenne des vents recensés sur le site, etc..., ces pales seront plus ou moins hautes, larges, etc.

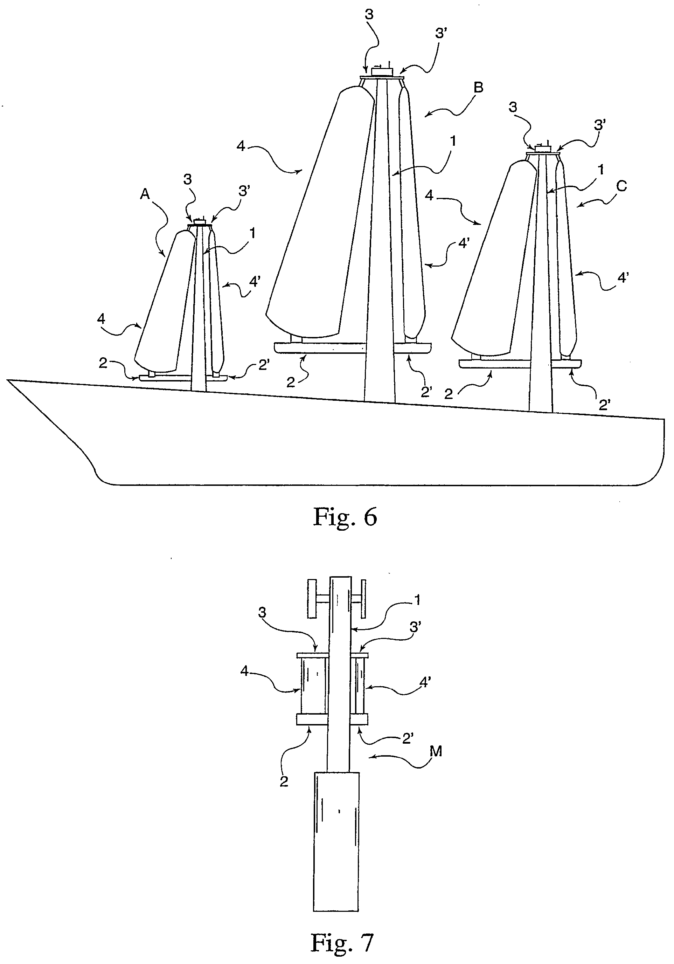

Dans la configuration de la figure 6, trois éoliennes selon l'invention (A, B, C) sont montées sur un bateau à la place des mâts traditionnels. Dans ce contexte, les pales (4, 4', 4") remplacent les voiles. La propulsion du bateau se fait par l'intermédiaire d'un moteur électrique alimenté par les génératrices situées à la base de chacune des éoliennes (A, B, C). Celles-ci sont, classiquement, contrôlées par ordinateur(s) qui tire(nt) partie des informations obtenues par les capteurs pour orienter chaque pale, individuellement, de la meilleure manière, afin d'optimiser le rendement du système.

Une telle application peut par exemple être appliquée à des barges opérant en mer, au large, afin d'obtenir du courant avec des installations considérablement moins coûteuses que les actuels champs d'éoliennes.

On a mentionné auparavant la possibilité de divers dimensionnements pour l'éolienne de l'invention, selon les applications désirées.

En figure 7, l'éolienne est de très petite taille, et peut être montée sur des poteaux ou des mâts (M) existants tels que des antennes pour des relais de téléphone portable. Elles produisent alors l'énergie nécessaire pour assurer le fonctionnement en cas de panne, ladite énergie étant bien entendu alors stockée dans des batteries pour être restituée en cas de besoin. Les mâts actuels de relais de téléphone portable sont déjà équipés de batteries, et parfois de groupes électrogènes, voire d'un groupe de transformation de courant continu en alternatif. L'installation d'une éolienne selon l'invention pourrait parfaitement s'insérer dans ce type de structure.

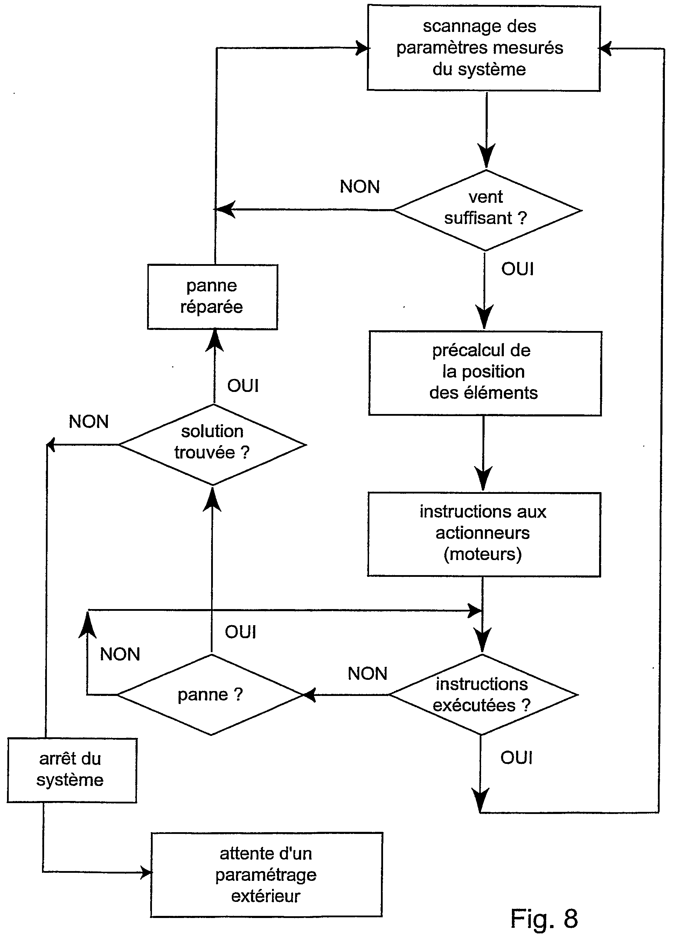

La figure 8 représente un organigramme très général de la commande et de l'organisation du système, réalisées par au moins un ordinateur. Ce logiciel permet d'avoir une gestion intelligente de chaque éolienne. Il rapproche les diverses informations telles que la vitesse, la direction du vent, les positions angulaires de chaque pale, la vitesse de rotation de l'éolienne, sa position angulaire, pour calculer à tout instant la position optimale de chaque pale par rapport au vent. Outre ces caractéristiques purement techniques, l'ordinateur gère également la production et la consommation d'énergie, ladite consommation étant envisagée globalement et pour chaque élément du système. La température étant également un paramètre d'une importance considérable, l'unité centrale gère également la température atmosphérique, ainsi que celle des divers organes qui participent à l'éolienne.

Le logiciel comprend un certain nombre d'abaques de valeurs qui sont mises en oeuvre par le biais de comparaisons avec les valeurs mesurées, en vue d'adopter un comportement approprié face aux conditions météorologiques.

Le ou les logiciels intégrés dans chaque éolienne permettent une gestion autonome de celle-ci. Cette gestion permet également de prévoir certaines *défaillances* d'organes à l'avance, et de détecter toute anomalie du système à distance. Ainsi, les trois pales étant complètement indépendantes, elles peuvent être également gérées de façon autonome. Dans l'hypothèse où un moteur de rotation tombe en panne, il y aura par exemple deux possibilités d'action : la pale correspondante peut rester perpendiculaire au fût, et l'éolienne est alors arrêtée et se met en position de protection avec cette pale située derrière le fût par rapport à la vitesse du vent. Si ladite pale n'est pas perpendiculaire au fût, le système la rapprochera de ce dernier, et l'éolienne pourra continuer à fonctionner avec deux pales.

Le fonctionnement des éoliennes pourra être géré à distance via le réseau internet ou d'autres réseaux appropriés.

L'organigramme de la figure 8 montre bien qu'il y a un scannage permanent de l'ensemble des paramètres du système, mesurés à l'aide des capteurs ou équivalents, et que toutes les valeurs sont prises en compte pour pouvoir faire fonctionner l'éolienne. En cas de panne, le système peut s'auto-réparer ou se mettre à l'arrêt pour attendre une aide extérieure.

## Revendications

1. Eolienne à axe d'allure verticale comportant un fût central rotatif auquel sont fixées des pales sensiblement verticales, **caractérisée en ce que** lesdites pales peuvent tourner et se déplacer radialement par rapport au fût central, le mouvement de chaque pale étant contrôlé de manière autonome, chaque pale indépendamment les unes des autres, en fonction des conditions auxquelles elle est soumise à chaque instant en vue d'optimiser le rendement global de l'éolienne.

2. Eolienne à axe d'allure verticale selon la revendication précédente, dans laquelle l'une au moins des extrémités de chaque arbre de rotation des pales est coulissable dans une direction radiale par rapport au fût central.

3. Eolienne à axe d'allure verticale selon la revendication précédente, dans laquelle l'extrémité inférieure de chaque arbre de rotation des pales est mobile radialement.

4. Eolienne à axe d'allure verticale selon la revendication 3, dans laquelle les deux extrémités de chaque arbre de rotation des pales sont mobiles radialement indépendamment l'une de l'autre.

5. Eolienne à axe d'allure verticale selon l'une des revendications 3 à 5, dans laquelle les extrémités des arbres de rotation des pales sont reliées à des bras se développant radialement à partir du fût central rotatif.

6. Eolienne à axe d'allure verticale selon la revendication précédente, dans laquelle les bras sont munis de glissières se développant selon leur axe.

7. Eolienne à axe d'allure verticale selon l'une quelconque des revendications précédentes, dans laquelle les pales sont rigides.

8. Eolienne à axe d'allure verticale selon la revendication précédente, dans laquelle la section transversale des pales est en forme de S allongé.

9. Eolienne à axe d'allure verticale selon l'une quelconque des revendications 7 et 8, dans laquelle les pales sont constituées de plusieurs parties assemblables.

10. Eolienne à axe d'allure verticale selon l'une quelconque des revendications 1 à 6, dans laquelle les pales sont fabriquées en un matériau souple par exemple utilisé dans le domaine des voiles.

11. Eolienne à axe d'allure verticale selon la revendication précédente, dans laquelle les pales sont enroulables dans ou autour d'un support inférieur et déployables à l'aide de câbles coopérant avec un support supérieur.

12. Eolienne à axe d'allure verticale selon la revendication précédente, dans laquelle au moins le support supérieur est doté d'un dispositif amortisseur.

13. Eolienne à axe d'allure verticale selon l'une quelconque des revendications 7 à 12, dans laquelle la section longitudinale des pales s'inscrit dans un trapèze.

14. Eolienne à axe d'allure verticale selon l'une quelconque des revendications précédentes, dans laquelle la position des arbres de rotation des pales par rapport au fût central et la position angulaire des pales sont gérées par au moins un ordinateur auquel sont reliés des capteurs des paramètres météorologiques de l'environnement de l'éolienne, lesdits ordinateurs pilotant des moyens moteurs entraînant les pales.

15. Eolienne à axe d'allure verticale selon la revendication précédente, dans laquelle l'ordinateur peut accélérer ou freiner la rotation de chaque pale pour optimiser sa position par rapport aux conditions de vent en vue améliorer le rendement.

16. Eolienne à axe d'allure verticale selon l'une des revendications 14 et 15, dans laquelle les paramètres pris en compte par le ou les ordinateurs sont notamment :
- la vitesse et la direction du vent, mesurées par une girouette et un anémomètre ;
- la position des pales ;
- la vitesse et la consommation d'énergie de l'éolienne ;
- la consommation des pales ;
- la température atmosphérique, et celle des composants de l'éolienne.

17. Eolienne à axe d'allure verticale selon l'une des revendications 14 à 16, dans laquelle le ou les ordinateurs peuvent être paramétrés par un ordinateur extérieur.

18. Eolienne à axe d'allure verticale selon l'une des revendications 14 à 17, dans laquelle les moyens moteurs entraînant les pales sont des moteurs électriques.

19. Eolienne à axe d'allure verticale selon l'une des revendications 14 à 18, dans laquelle les capteurs des paramètres météorologiques sont placés au-dessus des pales.

20. Eolienne à axe d'allure verticale selon l'une quelconque des revendications précédentes, dans laquelle les dispositifs de transformation de l'énergie, et en particulier la génératrice électrique, sont disposés au niveau de la base de l'éolienne, sous le fût central rotatif.

21. Eolienne à axe d'allure verticale selon l'une quelconque des revendications précédentes, dans laquelle le fût rotatif entoure un fût fixe.

22. Eolienne à axe d'allure verticale selon la revendication précédente, dans laquelle le fût fixe est surmonté d'une cabine supérieure et muni de moyens d'accès à ladite cabine.

23. Eolienne à axe d'allure verticale selon la revendication précédente, dans laquelle les moyens d'accès à la cabine supérieure consistent en un escalier et/ou un ascenseur.

24. Eolienne à axe d'allure verticale selon l'une des revendications 21 à 23, dans laquelle le fût fixe est composé d'éléments télescopiques.

25. Eolienne à axe d'allure verticale selon l'une quelconque des revendications précédentes, dans laquelle le fût central rotatif est constitué d'éléments légers ou ajourés.

26. Eolienne à axe d'allure verticale selon l'une quelconque des revendications précédentes, dans laquelle elle est arrimée au sol via des haubans.

27. Eolienne à axe d'allure verticale selon l'une quelconque des revendications précédentes, dans laquelle un local technique est disposé à la base du fût central rotatif.

## Patentansprüche

1. Windturbine mit vertikaler Achse, die einen rotierenden zentralen Schaft aufweist, an dem etwa vertikale Schaufeln befestigt sind, **dadurch gekennzeichnet, dass** die Schaufeln drehen und sich radial im Verhältnis zum zentralen Schaft verlagern können, wobei die Bewegung jeder Schaufel, wobei jede Schaufel unabhängig von den anderen ist, in Abhängigkeit von den Bedingungen, denen sie in jedem Moment ausgesetzt ist, um die globale Leistung der Windturbine zu verbessern, autonom gesteuert wird.

2. Windturbine mit vertikaler Achse nach vorangehendem Anspruch, **dadurch gekennzeichnet, dass** mindestens eines der Enden jeder Rotationswelle der Schaufeln in einer im Verhältnis zum zentralen Schaft radialen Richtung verschiebbar ist.

3. Windturbine mit vertikaler Achse nach vorangehendem Anspruch, **dadurch gekennzeichnet, dass** das untere Ende jeder Rotationswelle der Schaufeln radial beweglich ist.

4. Windturbine mit vertikaler Achse nach Anspruch 3, **dadurch gekennzeichnet, dass** die zwei Enden jeder Rotationswelle der Schaufeln unabhängig voneinander radial beweglich sind.

5. Windturbine mit vertikaler Achse nach einem der Ansprüche 3 bis 5, **dadurch gekennzeichnet, dass** die Enden der Rotationswellen der Schaufeln mit Armen verbunden sind, die sich radial ab dem rotierenden zentralen Schaft entwickeln.

6. Windturbine mit vertikaler Achse nach vorangehendem Anspruch, **dadurch gekennzeichnet, dass** die Arme mit Gleitschienen ausgestattet sind, die sich gemäß ihrer Achse entwickeln.

7. Windturbine mit vertikaler Achse nach einem der vorangehenden Ansprüche, **dadurch gekennzeichnet, dass** die Schaufeln starr sind.

8. Windturbine mit vertikaler Achse nach vorangehendem Anspruch, **dadurch gekennzeichnet, dass** der Querschnitt der Schaufeln die form eines langgezogenen S hat.

9. Windturbine mit vertikaler Achse nach einem der Ansprüche 7 und 8, **dadurch gekennzeichnet, dass** die Schaufeln aus mehreren verbindbaren Teilen gebildet sind.

10. Windturbine mit vertikaler Achse nach einem der Ansprüche 1 bis 6, **dadurch gekennzeichnet, dass** die Schaufeln aus einem elastischen Material hergestellt sind, das beispielsweise im Bereich der Segel verwendet wird.

11. Windturbine mit vertikaler Achse nach vorangehendem Anspruch, **dadurch gekennzeichnet, dass** die Schaufeln in einem oder um einen untere Halter wickelbar und mit Hilfe von Kabeln entfaltbar sind, die mit einem unteren Halter zusammenarbeiten.

12. Windturbine mit vertikaler Achse nach vorangehendem Anspruch, **dadurch gekennzeichnet, dass** mindestens der untere Halter mit einer Dämpfungsvorrichtung ausgestattet ist.

13. Windturbine mit vertikaler Achse nach einem der Ansprüche 7 bis 12, **dadurch gekennzeichnet, dass** sich der Längsschnitt der Schaufeln in ein Trapez einschreibt.

14. Windturbine mit vertikaler Achse nach einem der vorangehenden Ansprüche, **dadurch gekennzeichnet, dass** die Position der Rotationswellen der Schaufeln im Verhältnis zum zentralen Schaft und die Winkelposition der Schaufeln von mindestens einem Rechner verwaltet werden, mit dem Sensoren der meteorologischen Parameter im Umfeld der Windturbine verbunden sind, wobei die Rechner Motormittel steuern, die die Schaufeln antreiben.

15. Windturbine mit vertikaler Achse nach vorangehendem Anspruch, **dadurch gekennzeichnet, dass** der Rechner die Rotation jeder Schaufel beschleunigen oder bremsen kann, um ihre Position im Verhältnis zu den Windbedingungen zwecks Verbesserung der Leistung zu optimieren.

16. Windturbine mit vertikaler Achse nach einem der Ansprüche 14 und 15, **dadurch gekennzeichnet, dass** die von dem oder den Rechnern berücksichtigten Parameter insbesondere sind:
- die Geschwindigkeit und die Richtung des Windes, gemessen von einer Windfahne und von einem Anemometer,
- die Position der Schaufeln,
- die Geschwindigkeit und der Energieverbrauch der Windturbine,
- der Verbrauch der Schaufeln,
- die atmosphärische Temperatur und die der Bauteile der Windturbine.

17. Windturbine mit vertikaler Achse nach einem der Ansprüche 14 bis 16, **dadurch gekennzeichnet, dass** der oder die Rechner von einem äußeren Rechner parametriert sein können.

18. Windturbine mit vertikaler Achse nach einem der Ansprüche 14 bis 17, **dadurch gekennzeichnet, dass** die Motormittel, die die Schaufeln antreiben, Elektromotoren sind.

19. Windturbine mit vertikaler Achse nach einem der Ansprüche 14 bis 18, **dadurch gekennzeichnet, dass** die Sensoren der meteorologischen Parameter über den Schaufeln platziert sind.

20. Windturbine mit vertikaler Achse nach einem der vorangehenden Ansprüche, **dadurch gekennzeichnet, dass** die Energieumwandlungsmittel und insbesondere der Stromgenerator im Bereich der Basis der Windturbine unter dem rotierenden zentralen Mast angeordnet sind.

21. Windturbine mit vertikaler Achse nach einem der vorangehenden Ansprüche, **dadurch gekennzeichnet, dass** der rotierende Schaft einen starren Schaft umgibt.

22. Windturbine mit vertikaler Achse nach vorangehendem Anspruch, **dadurch gekennzeichnet, dass** sich über dem starren Schaft eine obere Kabine befindet und mit Zugangsmitteln zu der Kabine ausgestattet ist.

23. Windturbine mit vertikaler Achse nach vorangehendem Anspruch, **dadurch gekennzeichnet, dass** die Zugangsmittel zu der oberen Kabine aus einer Treppe und/oder einem Lift bestehen.

24. Windturbine mit vertikaler Achse nach einem der Ansprüche 21 bis 23, **dadurch gekennzeichnet, dass** der starre Schaft aus Teleskopelementen zusammengesetzt ist.

25. Windturbine mit vertikaler Achse nach einem der vorangehenden Ansprüche, **dadurch gekennzeichnet, dass** der rotierende zentrale Schaft aus leichten oder durchbrochenen Elementen gebildet ist.

26. Windturbine mit vertikaler Achse nach einem der vorangehenden Ansprüche, **dadurch gekennzeichnet, dass** er mit Hilfe von Spannseilen am Boden befestigt ist.

27. Windturbine mit vertikaler Achse nach einem der vorangehenden Ansprüche, **dadurch gekennzeichnet, dass** an der Basis des rotierenden zentralen Schafts ein Technikraum angeordnet ist.

## Claims

1. A vertical-axis wind turbine including a central rotary tower to which substantially vertical blades are fastened, **characterized in that** said blades can rotate and move radially relative to the central tower, the movement of each blade being controlled autonomously, each blade independently of the others, based on the conditions to which it is subjected at each moment in order to optimize the overall performance of the wind turbine.

2. The vertical-axis wind turbine according to the preceding claim, wherein least one of the ends of each rotating shaft of the blades can slide in a radial direction relative to the central tower.

3. The vertical-axis wind turbine according to the preceding claim, wherein the lower end of each rotating shaft of the blades is radially movable.

4. The vertical-axis wind turbine according to claim 3, wherein the two ends of each rotating shaft of the blades are movable radially independently of one another.

5. The vertical-axis wind turbine according to one of claims 3 to 5, wherein the ends of the rotating shafts of the blades are connected to arms developing radially from the central rotary tower.

6. The vertical-axis wind turbine according to the preceding claims, wherein the arms are provided with guideways developing along their axis.

7. The vertical-axis wind turbine according to any one of the preceding claims, wherein the blades are rigid.

8. The vertical-axis wind turbine according to the preceding claim, wherein the cross-section of the blades is in the shape of an elongated S.

9. The vertical-axis wind turbine according to any one of claims 7 and 8, wherein the blades are made of several parts that can be assembled.

10. The vertical-axis wind turbine according to any one of claims 1 to 6, wherein the blades are manufactured from a flexible material, for example used in the sailing field.

11. The vertical-axis wind turbine according to the preceding claim, wherein the blades can be wound in or around a lower support and can be deployed using cables cooperating with an upper support.

12. The vertical-axis wind turbine according to the preceding claim, wherein at least the upper support is provided with a damping device.

13. The vertical-axis wind turbine according to any one of claims 7 to 12, wherein the longitudinal section of the blades fits in a trapezoid.

14. The vertical-axis wind turbine according to any one of the preceding claims, wherein the position of the rotary shafts of the blades relative to the central tower and the angular position of the blades are managed by at least one computer to which sensors for meteorological parameters of the environment of the wind turbine are connected, said computers controlling the drive means driving the blades.

15. The vertical-axis wind turbine according to the preceding claim, wherein the computer can accelerate or slow the rotation of each blade to optimize its position relative to the wind conditions in order to improve the performance.

16. The vertical-axis wind turbine according to one of claims 14 and 15, wherein the parameters taken into account by the computer(s) are in particular:
- the speed and direction of the wind, measured by a wind vane and an airspeed indicator;
- the position of the blades;
- the speed and energy consumption of the wind turbine;
- the consumption of the blades;
- the atmospheric temperature, and that of the components of the wind turbine.

17. The vertical-axis wind turbine according to one of claims 14 to 16, wherein the computer(s) can be configured by an external computer.

18. The vertical-axis wind turbine according to one of claims 14 to 17, wherein the motor means driving the blades are electric motors.

19. The vertical-axis wind turbine according to one of claims 14 to 18, wherein the sensors of the meteorological parameters are placed above the blades.

20. The vertical-axis wind turbine according to any one of the preceding claims, wherein the energy conversion devices, and in particular the electric generator, are positioned at the base of the wind turbine, below the central rotary tower.

21. The vertical-axis wind turbine according to any one of the preceding claims, wherein the rotary tower surrounds a stationary tower.

22. The vertical-axis wind turbine according to the preceding claim, wherein the stationary tower is topped by an upper cabin and provided with means for accessing said cabin.

23. The vertical-axis wind turbine according to the preceding claim, wherein the means for accessing the upper cabin consist of a staircase and/or an elevator.

24. The vertical-axis wind turbine according to one of claims 21 to 23, wherein the stationary tower is made up of telescoping elements.

25. The vertical-axis wind turbine according to any one of the preceding claims, wherein the central rotary tower is made up of light or openwork elements.

26. The vertical-axis wind turbine according to any one of the preceding claims, wherein it is moored to the ground via cross braces.

27. The vertical-axis wind turbine according to any one of the preceding claims, wherein a technical site is positioned at the base of the central rotary tower.
